# EUROPEAN PATENT SPECIFICATION

(11) **EP 4 228 074 B1**
(45) Date of publication and mention of the grant of the patent: **17.04.2024**
(21) Application number: 22190077.2
(22) Date of filing: 11.08.2022
(51) Int. Cl.: H01M 50/403, H01M 50/426, H01M 50/431, H01M 50/443, H01M 50/446, H01M 50/457

(54) **METHOD FOR PREPARING COMPOSITE COATED SEPARATOR OF THERMAL RESISTANCE AND HIGH AIR PERMEABILITY**
VERFAHREN ZUR HERSTELLUNG EINES ZUSAMMENGESETZTEN BESCHICHTETEN SEPARATORS MIT THERMISCHER BESTÄNDIGKEIT UND HOHER LUFTDURCHLÄSSIGKEIT
PROCÉDÉ DE PRÉPARATION D'UN SÉPARATEUR À REVÊTEMENT COMPOSITE PRÉSENTANT UNE RÉSISTANCE THERMIQUE ET UNE PERMÉABILITÉ À L'AIR ÉLEVÉE

(30) Priority: 10.02.2022 CN 202210148796
(43) Date of publication of application: 16.08.2023
(73) Proprietor: Jiangsu Horizon New Energy Tech Co., Ltd, Jintan District Changzhou Jiangsu 213213 (CN)
(72) Inventor: LIU, Meilin, Changzhou, 213213 (CN); ZHANG, Libin, Changzhou, 213213 (CN); SHEN, Yading, Changzhou, 213213 (CN)
(74) Representative: Bayramoglu et al.

(56) References cited:
- CN-A- 109 461 873
- CN-A- 111 180 644
- CN-A- 111 211 274
- "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf

## Description

### TECHNICAL FIELD

The present invention relates to the field of preparation of lithium ion battery separators, and in particular to a method for preparing a composite coated separator of thermal resistance and high air permeability.

### BACKGROUND

Lithium ion batteries are substitute products of commonly used nickel-cadmium and nickel-hydrogen batteries due to their advantages of light weight, small size, absence of memory effect, wide applicable temperature range and the like, demonstrating great potential in the development of energy storage equipment. In the composition of a lithium ion battery, the separator is an additional material with the highest technical barrier in the lithium ion battery (lithium battery) materials, accounting for about 15%-30% of total cost of the lithium battery. The separator can isolate the anode and the cathode after absorbing the electrolyte solution, thereby preventing short circuit and allowing free conduction of lithium ions. The air permeability of the separator is determined by physical properties such as pore diameter, distribution of pore diameter, porosity, etc., and the air permeability is closely related to ion conductivity and internal resistance of the battery, and thus, increasing the air permeability of the separator can reduce the internal resistance of the battery effectively.

The base membrane materials of the existing lithium battery microporous separator are mainly polyethylene and polypropylene microporous membrane materials, which, however, have defects such as ease of shrinkage at heating, resulting in unstable size of the separator and short circuit due to direct contact of the anode and the cathode; in addition, the closed-pore temperature and the membrane rupture temperature are low, such that when conditions such as battery puncture occur, the separator will be completely melted, causing short circuit and disassembly and explosion of the battery because of the high temperature. In order to solve the thermal resistance defects, the ceramic material is coated on the base membrane to enhance the thermal shrinkage resistance of the separator. Although the method solves the thermal resistance problem, other problems emerge, such as increase of internal resistance due to increased thickness, and irreversible high-power rapid charge and discharge. Today, due to the increase of portable products, higher demands are proposed for the performance of the coating.

Therefore, it is necessary to find a coated separator for lithium ion batteries having higher air permeability, higher thermal resistance, and better performance.

### SUMMARY

The present invention is intended to solve the technical problems of air permeability and thermal resistance of separator in existing lithium ion batteries by providing a composite coated separator material of thermal resistance and high air permeability. The separator material is prepared by applying a mixed slurry of a magnesium aluminum hydrotalcite slurry and a metal organic framework (MOF) slurry on a polyolefin material, providing the composite separator with thermal shrinkage resistance and high air permeability, and effectively improving the safety performance and cycling performance of the battery.

In order to solve the above technical problems, the present invention adopts the following technical schemes:
A method for preparing a composite coated separator of thermal resistance and high air permeability is provided, comprising:
(1) preparing an MOF coating slurry:
   separately dissolving 0.8-1.0 g of copper(ii) nitrate trihydrate and 0.4-0.6 g of trimesic acid in 150-170 mL of ethanol, mixing the two after complete dissolution, stirring at room temperature for 30-120 min or sonicating for 20-50 min to obtain a precursor dispersion, and washing the resulting dispersion with ethanol and then drying in a vacuum drying oven at about 160 °C for 12 h to obtain an MOF product; and finally, adding the MOF product and polyvinylidene difluoride (PVDF) into N methylpyrrolidone (NMP) in a certain mass ratio, and stirring and dispersing for 60 min to obtain the MOF coating slurry;
(2) preparing a hydrotalcite coating slurry:
   uniformly mixing 50-70 parts of ultrapure water and 0.3-0.6 parts of a dispersant as per part by weight, then adding 20-40 parts of magnesium aluminum hydrotalcite powder, and after stirring at a high speed, adding 4-8 parts of a thickening agent and uniformly mixing; and grinding the resulting slurry by a sand mill, adding 2-5 parts of a binder and 0.05-0.15 parts of a wetting agent, and stirring uniformly to obtain the hydrotalcite coating slurry;
(3) preparing a composite coated separator of thermal resistance and high air permeability:
   applying the hydrotalcite coating slurry prepared in step (2) on two sides of a base membrane through roller coating, and drying the base membrane to obtain a semi-finished hydrotalcite coated membrane; and using the semi-finished hydrotalcite coated membrane as a base membrane, applying the MOF coating slurry obtained in step (1) on two sides of the membrane through mixed coating, and drying the membrane to obtain the composite coated separator of thermal resistance and high air permeability.

Preferably, the mass ratio of the MOF product to PVDF in step (1) of the present invention is 1.5:1 to 3:1.

Preferably, the hydrotalcite coating slurry and the MOF coating slurry in the step (3) of the present invention are applied with a coating thickness of 0.5-1.5 µm.

After adopting the technical schemes, the present invention obtains the following beneficial effects:
(1) The metal organic framework (MOF) material coating has the advantage of adjustable pore diameter, and a suitable pore size can effectively control shuttling of ions in the electrolyte, inhibit occurrence of adverse side reactions, improve battery capacity and prolong the cycling life. In addition, the uniform porous structure of the metal organic framework material coating enables the passing ions to be uniformly dispersed on the surface of electrodes, thereby fundamentally inhibiting growth of lithium dendrites, effectively improving the safety performance of the battery and prolonging the cycling life of the battery.
(2) Space charges of the hydrotalcite material coated membrane on the surface of the battery cathode are neutralized in an electrochemical cycling process, such that lithium deposited on the surface of the cathode is more uniform, resulting in a relatively flat dendrite-free surface, which can, when works with the metal organic framework, completely eliminate the potential hazards of the lithium dendrites, thereby significantly improving the cycling performance of the lithium battery.
(3) The hydrotalcite is a novel inorganic material having extremely strong hydrophily and a magnesium aluminate crystal structure. Due to crystal lattice energy minimization effect and crystal lattice positioning effect, the hydrotalcite can be applied on two sides of the base membrane in an extremely small dimension, thus significantly reducing the thickness of lithium battery separator coating and increasing designed capacity of the lithium battery. In addition, the hydrotalcite has good thermal stability, such that the structure of the hydrotalcite will not be changed in an environment below 200 °C, thereby improving the thermal stability of the separator.
(4) The metal organic framework material is coated on the outer side of the hydrotalcite coated membrane, thus improving peeling strength and thermal resistance of the whole coated membrane. Meanwhile, due to the small overall coating thickness of the separator and the unique structural performance of the hydrotalcite, the air permeability of the composite separator is significantly improved, and the corresponding liquid absorption/retention rate is also greatly improved.

### DETAILED DESCRIPTION

The present invention will be further described with reference to specific examples, but is not limited to the examples.

The polyethylene separator used in the following examples is a commercial separator having a thickness of 7 µm. The D50 of the hydrotalcite powder used in the present invention was in the range of 0.4-0.5 µm; the dispersant was a polycarboxylic acid; the thickening agent was a hydroxymethyl cellulose; the binder was a polyvinyl alcohol; the wetting agent was an alkoxylated isomeric alcohol.

### Example 1

### (1) Preparation of MOF coating slurry

0.88 g of copper(ii) nitrate trihydrate and 0.4 g of trimesic acid were separately dissolved in 150 mL of ethanol, and the two resulting solution were mixed after complete dissolution, and stirred at room temperature for 30-120 min or sonicated for 20-50 min to obtain a precursor dispersion. The obtained dispersion was washed with ethanol and dried in a vacuum drying oven at about 160 °C for 12 h to obtain an MOF product.

The MOF product and PVDF were added into NMP in a mass ratio of 2:1, and the mixture was stirred for dispersion for 60 min to obtain the coating slurry.

### (2) Preparation of hydrotalcite coating slurry

60 parts of ultrapure water and 0.5 parts of the dispersant were uniformly mixed as per part by weight, then 30 parts of magnesium aluminum hydrotalcite powder were added, and after stirring at a high speed, 6 parts of the thickening agent were added and the mixture was uniformly mixed. The resulting slurry was ground by a sand mill, 3 parts of the binder and 0.1 parts of the wetting agent were finally added, and the mixture was stirred uniformly to obtain the hydrotalcite coating slurry.

### (3) Preparation of composite coated separator of thermal resistance and high air permeability

The prepared hydrotalcite coating slurry was applied on two sides of the base membrane through roller coating (with a thickness of 1 µm), and the base membrane was dried to obtain a semi-finished coated membrane. The semi-finished hydrotalcite coated membrane was used as a base membrane, the MOF coating slurry was applied on two sides of the membrane through mixed coating (with a thickness of 1 µm), and the membrane was dried to obtain the composite coated separator.

### Example 2

### (1) Preparation of MOF coating slurry

0.88 g of copper(ii) nitrate trihydrate and 0.4 g of trimesic acid were separately dissolved in 150 mL of ethanol, and the two resulting solution were mixed after complete dissolution, and stirred at room temperature for 30-120 min or sonicated for 20-50 min to obtain a precursor dispersion. The obtained dispersion was washed with ethanol and dried in a vacuum drying oven at about 160 °C for 12 h to obtain an MOF product.

The MOF product and PVDF were added into NMP in a mass ratio of 1.5:1, and the mixture was stirred for dispersion for 60 min to obtain the coating slurry.

### (2) Preparation of hydrotalcite coating slurry

60 parts of ultrapure water and 0.5 parts of the dispersant were uniformly mixed as per part by weight, then 30 parts of magnesium aluminum hydrotalcite powder were added, and after stirring at a high speed, 6 parts of the thickening agent were added and the mixture was uniformly mixed. The resulting slurry was ground by a sand mill, 3 parts of the binder and 0.1 parts of the wetting agent were finally added, and the mixture was stirred uniformly to obtain the hydrotalcite coating slurry.

### (3) Preparation of composite coated separator of thermal resistance and high air permeability

The prepared hydrotalcite coating slurry was applied on two sides of the base membrane through roller coating (with a thickness of 1 µm), and the base membrane was dried to obtain a semi-finished coated membrane. The semi-finished hydrotalcite coated membrane was used as a base membrane, the MOF coating slurry was applied on two sides of the membrane through mixed coating (with a thickness of 1 µm), and the membrane was dried to obtain the composite coated separator.

### Example 3

### (1) Preparation of MOF coating slurry

0.88 g of copper(ii) nitrate trihydrate and 0.4 g of trimesic acid were separately dissolved in 150 mL of ethanol, and the two resulting solution were mixed after complete dissolution, and stirred at room temperature for 30-120 min or sonicated for 20-50 min to obtain a precursor dispersion. The obtained dispersion was washed with ethanol and dried in a vacuum drying oven at about 160 °C for 12 h to obtain an MOF product.

The MOF product and PVDF were added into NMP in a mass ratio of 3:1, and the mixture was stirred for dispersion for 60 min to obtain the coating slurry.

### (2) Preparation of hydrotalcite coating slurry

60 parts of ultrapure water and 0.5 parts of the dispersant were uniformly mixed as per part by weight, then 40 parts of magnesium aluminum hydrotalcite powder were added, and after stirring at a high speed, 6 parts of the thickening agent were added and the mixture was uniformly mixed. The resulting slurry was ground by a sand mill, 3 parts of the binder and 0.1 parts of the wetting agent were finally added, and the mixture was stirred uniformly to obtain the hydrotalcite coating slurry.

### (3) Preparation of composite coated separator of thermal resistance and high air permeability

The prepared hydrotalcite coating slurry was applied on two sides of the base membrane through roller coating (with a thickness of 1 µm), and the base membrane was dried to obtain a semi-finished coated membrane. The semi-finished hydrotalcite coated membrane was used as a base membrane, the MOF coating slurry was applied on two sides of the membrane through mixed coating (with a thickness of 1 µm), and the membrane was dried to obtain the composite coated separator.

### Example 4

### (1) Preparation of MOF coating slurry

0.8 g of copper(ii) nitrate trihydrate and 0.4 g of trimesic acid were separately dissolved in 150 mL of ethanol, and the two resulting solution were mixed after complete dissolution, and stirred at room temperature for 30-120 min or sonicated for 20-50 min to obtain a precursor dispersion. The obtained dispersion was washed with ethanol and dried in a vacuum drying oven at about 160 °C for 12 h to obtain an MOF product.

The MOF product and PVDF were added into NMP in a mass ratio of 2:1, and the mixture was stirred for dispersion for 60 min to obtain the coating slurry.

### (2) Preparation of hydrotalcite coating slurry

70 parts of ultrapure water and 0.3 parts of the dispersant were uniformly mixed as per part by weight, then 20 parts of magnesium aluminum hydrotalcite powder were added, and after stirring at a high speed, 4 parts of the thickening agent were added and the mixture was uniformly mixed. The resulting slurry was ground by a sand mill, 5 parts of the binder and 0.05 parts of the wetting agent were finally added, and the mixture was stirred uniformly to obtain the hydrotalcite coating slurry.

### (3) Preparation of composite coated separator of thermal resistance and high air permeability

The prepared hydrotalcite coating slurry was applied on two sides of the base membrane through roller coating (with a thickness of 0.5 µm), and the base membrane was dried to obtain a semi-finished coated membrane. The semi-finished hydrotalcite coated membrane was used as a base membrane, the MOF coating slurry was applied on two sides of the membrane through mixed coating (with a thickness of 0.5 µm), and the membrane was dried to obtain the composite coated separator.

### Example 5

### (1) Preparation of MOF coating slurry

1.0 g of copper(ii) nitrate trihydrate and 0.6 g of trimesic acid were separately dissolved in 170 mL of ethanol, and the two resulting solution were mixed after complete dissolution, and stirred at room temperature for 30-120 min or sonicated for 20-50 min to obtain a precursor dispersion. The obtained dispersion was washed with ethanol and dried in a vacuum drying oven at about 160 °C for 12 h to obtain an MOF product.

The MOF product and PVDF were added into NMP in a mass ratio of 2:1, and the mixture was stirred for dispersion for 60 min to obtain the coating slurry.

### (2) Preparation of hydrotalcite coating slurry

50 parts of ultrapure water and 0.6 parts of the dispersant were uniformly mixed as per part by weight, then 38 parts of magnesium aluminum hydrotalcite powder were added, and after stirring at a high speed, 8 parts of the thickening agent were added and the mixture was uniformly mixed. The resulting slurry was ground by a sand mill, 2 parts of the binder and 0.15 parts of the wetting agent were finally added, and the mixture was stirred uniformly to obtain the hydrotalcite coating slurry.

### (3) Preparation of composite coated separator of thermal resistance and high air permeability

The prepared hydrotalcite coating slurry was applied on two sides of the base membrane through roller coating (with a thickness of 1.5 µm), and the base membrane was dried to obtain a semi-finished coated membrane. The semi-finished hydrotalcite coated membrane was used as a base membrane, the MOF coating slurry was applied on two sides of the membrane through mixed coating (with a thickness of 1.5 µm), and the membrane was dried to obtain the composite coated separator.

### Comparative Example 1

### (1) Preparation of hydrotalcite coating slurry

60 parts of ultrapure water and 0.5 parts of the dispersant were uniformly mixed as per part by weight, then 30 parts of magnesium aluminum hydrotalcite powder were added, and after stirring at a high speed, 6 parts of the thickening agent were added and the mixture was uniformly mixed. The resulting slurry was ground by a sand mill, 3 parts of the binder and 0.1 parts of the wetting agent were finally added, and the mixture was stirred uniformly to obtain the hydrotalcite coating slurry.

### (2) Application of slurry on two sides of base membrane

The prepared hydrotalcite coating slurry was applied on two sides of the base membrane through roller coating (with a thickness of 2 µm), and the base membrane was dried to obtain a semi-finished coated membrane.

The composite coated separators obtained in Examples 1-5 and the comparative example are subjected to tests for air permeability, peeling strength, thermal shrinkage and other performance. The specific results are shown in Table 1.

Air permeability and thermal shrinkage performance testing of the composite coated separators of Examples 1-5 and the comparative example

| Separator sample | Thickness (µm) | Air permeability (s/100 mL) | Peeling strength (N/m) | Thermal shrinkage (150 °C·h) | |
|---|---|---|---|---|---|
| | | | | Machine direction (MD) | Transverse direction (TD) |
| Example 1 | 11.14 | 102 | 115 | 1.16 | 1.11 |
| Example 2 | 11.18 | 112 | 105 | 1.93 | 1.29 |
| Example 3 | 11.12 | 111 | 121 | 1.18 | 1.04 |
| Example 4 | 9.02 | 96 | 102 | 2.36 | 1.68 |
| Example 5 | 13.14 | 128 | 124 | 0.97 | 0.99 |
| Comparative Example 1 | 11.15 | 132 | 66 | 2.09 | 1.45 |

As can be seen from Table 1: (1) the air permeability of the coatings of Examples 1-5 were less than that of the coating of Comparative Example 1; (2) compared with Comparative Example 1, the peeling strengths of Examples 1-5 were increased due to the exterior coating of the metal organic framework material; and (3) in a condition of 150 °C·h, the thermal shrinkage rates of the coated separators of Examples 1-3 were less than that of the composite coated separator of the comparative example, suggesting the excellent thermal shrinkage resistance of the composite separators.

The composite coated separators obtained in Examples 1-5 and the comparative example are subjected to tests for conductivity, liquid absorption and other performance. The specific results are shown in Table 2.

**Table 2. Conductivity and liquid absorption performance testing of the composite coated separators of Examples 1-5 and the comparative example**

| Item | Example 1 | Example 2 | Example 3 | Example 4 | Example 5 | Compar ative Example 1 |
|---|---|---|---|---|---|---|
| Conductivity (Ω) | 0.3697 | 0.3125 | 0.4022 | 0.3368 | 0.3577 | 0.2386 |
| Liquid absorption of separator (%) | 223 | 210 | 233 | 186 | 242 | 132 |
| Liquid retention of separator (%) | 111 | 102 | 116 | 90 | 123 | 65 |

As can be seen from Table 2: the conductivities and the liquid absorptions and retentions of the composite coated separators of Examples 1-5 are significantly superior to those of the coated separator of the comparative example.

In summary, the composite coated separator prepared by the present invention has the advantages of thermal shrinkage resistance, high liquid retention and low internal resistance, can realize thin-layer coating, and is prospective for applications in the field of separators.

The above-described examples are merely illustrative of the principles of the present invention and the performances as well as a part of the implemented examples. It will be apparent to those of ordinary skill in the art that without departing from the present inventive concepts, several variations and modifications can be made, and such variations and modifications all fall within the protection scope of the claims of the present invention.

## Claims

1. A method for preparing a composite coated separator of thermal resistance and high air permeability, comprising:
(1) preparing an MOF coating slurry:
separately dissolving 0.8-1.0 g of copper(ii) nitrate trihydrate and 0.4-0.6 g of trimesic acid in 150-170 mL of ethanol, mixing the two after complete dissolution, stirring at room temperature for 30-120 min or sonicating for 20-50 min to obtain a precursor dispersion, and washing the resulting dispersion with ethanol and then drying in a vacuum drying oven at about 160 °C for 12 h to obtain an MOF product; and finally, adding the MOF product and PVDF into NMP in a certain mass ratio, and stirring and dispersing for 60 min to obtain the MOF coating slurry;
(2) preparing a hydrotalcite coating slurry:
uniformly mixing 50-70 parts of ultrapure water and 0.3-0.6 parts of a dispersant as per part by weight, then adding 20-40 parts of magnesium aluminum hydrotalcite powder, and after stirring at a high speed, adding 4-8 parts of a thickening agent and uniformly mixing; and grinding the resulting slurry by a sand mill, adding 2-5 parts of a binder and 0.05-0.15 parts of a wetting agent, and stirring uniformly to obtain the hydrotalcite coating slurry;
(3) preparing a composite coated separator of thermal resistance and high air permeability:
applying the hydrotalcite coating slurry prepared in step (2) on two sides of a base membrane through roller coating, and drying the base membrane to obtain a semi-finished hydrotalcite coated membrane; and using the semi-finished hydrotalcite coated membrane as a base membrane, applying the MOF coating slurry obtained in step (1) on two sides of the membrane through mixed coating, and drying the membrane to obtain the composite coated separator of thermal resistance and high air permeability.

2. The method for preparing the composite coated separator of thermal resistance and high air permeability according to claim 1, wherein the mass ratio of the MOF product to PVDF in step (1) is 1.5:1 to 3:1.

3. The method for preparing the composite coated separator of thermal resistance and high air permeability according to claim 1, wherein the hydrotalcite coating slurry and the MOF coating slurry in the step (3) are applied with a coating thickness of 0.5-1.5 µm.

## Patentansprüche

1. Verfahren zur Herstellung eines beschichteten Verbundseparators mit hoher Wärmebeständigkeit und hoher Luftdurchlässigkeit, umfassend:
(1) Herstellen einer MOF-Beschichtungsaufschlämmung:
separates Auflösen von 0,8-1,0 g Kupfer(ii)-nitrattrihydrat und 0,4 bis 0,6 g Trimesinsäure in 150 bis 170 ml Ethanol, Mischen der beiden nach vollständiger Auflösung, Rühren bei Raumtemperatur für 30 bis 120 min oder Ultraschallbehandeln für 20 bis 50 min, um eine Vorläuferdispersion zu erhalten, und Waschen der resultierenden Dispersion mit Ethanol und dann Trocknen in einem Vakuumtrocknungsofen bei etwa 160 °C für 12 h, um ein MOF-Produkt zu erlangen; und schließlich Zugeben des MOF-Produkts und PVDF zu NMP in einem bestimmten Massenverhältnis und Rühren und Dispergieren für 60 min, um die MOF-Beschichtungsaufschlämmung zu erhalten;
(2) Herstellen einer Hydrotalcit-Beschichtungsaufschlämmung:
gleichmäßiges Mischen von 50 bis 70 Teilen Reinstwasser und 0,3 bis 0,6 Teilen eines Dispergiermittels nach Gewichtsanteil, dann Zugeben von 20 bis 40 Teilen Magnesiumaluminiumhydrotalcitpulver und nach Rühren mit hoher Geschwindigkeit Zugeben von 4 bis 8 Teilen eines Verdickungsmittels und gleichmäßiges Mischen; und Mahlen der resultierenden Aufschlämmung mit einer Sandmühle, Zugeben von 2 bis 5 Teilen eines Bindemittels und 0,05 bis 0,15 Teilen eines Benetzungsmittels und gleichmäßiges Rühren, um die Hydrotalcit-Beschichtungsaufschlämmung zu erhalten;
(3) Herstellen eines beschichteten Verbundseparators mit hoher Wärmebeständigkeit und hoher Luftdurchlässigkeit:
Aufbringen der in Schritt (2) hergestellten Hydrotalcit-Beschichtungsaufschlämmung auf zwei Seiten einer Basismembran durch Walzenbeschichten und Trocknen der Basismembran, um eine halbfertige, mit Hydrotalcit beschichtete Membran zu erhalten; und Verwenden der halbfertigen, mit Hydrotalcit beschichteten Membran als Basismembran, Aufbringen der in Schritt (1) erhaltenen MOF-Beschichtungsaufschlämmung auf zwei Seiten der Membran durch Mischbeschichten und Trocknen der Membran, um den beschichteten Verbundseparator mit hoher Wärmebeständigkeit und hoher Luftdurchlässigkeit zu erhalten.

2. Verfahren zur Herstellung des beschichteten Verbundseparators mit hoher Wärmebeständigkeit und hoher Luftdurchlässigkeit nach Anspruch 1, wobei das Massenverhältnis des MOF-Produkts zu PVDF in Schritt (1) 1,5:1 bis 3:1 beträgt.

3. Verfahren zur Herstellung des beschichteten Verbundseparators mit hoher Wärmebeständigkeit und hoher Luftdurchlässigkeit nach Anspruch 1, wobei die Hydrotalcit-Beschichtungsaufschlämmung und die MOF-Beschichtungsaufschlämmung in Schritt (3) mit einer Beschichtungsdicke von 0,5 bis 1,5 µm aufgebracht werden.

## Revendications

1. Procédé pour la préparation d'un séparateur enduit d'un composite à résistance thermique et perméabilité à l'air élevée, comprenant :
(1) la préparation d'une suspension de revêtement MOF :
la dissolution séparée de 0,8 à 1,0 g de trihydrate de nitrate de cuivre (ii) et de 0,4 à 0,6 g d'acide trimésique dans 150 à 170 ml d'éthanol, le mélange des deux après dissolution complète, l'agitation à température ambiante pendant 30 à 120 min ou la sonication pendant 20 à 50 min pour obtenir une dispersion de précurseurs, et le lavage de la dispersion résultante avec de l'éthanol et ensuite le séchage dans un four de séchage sous vide à environ 160 °C pendant 12 h pour obtenir un produit MOF ; et enfin, l'ajout du produit MOF et de PVDF dans du NMP dans un certain rapport de masses, et l'agitation et dispersion pendant 60 min pour obtenir la suspension de revêtement MOF ;
(2) la préparation d'une suspension de revêtement d'hydrotalcite :
le mélange uniforme de 50 à 70 parts d'eau ultra-pure et de 0,3 à 0,6 parties d'un dispersant par partie en poids, puis l'ajout de 20 à 40 parties de poudre d'hydrotalcite de magnésium et d'aluminium, et après l'agitation à grande vitesse l'ajout de 4 à 8 parties d'un agent épaississant et le mélange uniforme ; et le broyage de la suspension obtenue par un broyeur à sable, l'ajout de 2 à 5 parties d'un liant et de 0,05 à 0,15 parties d'un agent mouillant, et l'agitation uniforme pour obtenir la suspension de revêtement d'hydrotalcite ;
(3) la préparation d'un séparateur enduit d'un composite à résistance thermique et perméabilité à l'air élevée :
l'application de la suspension de revêtement d'hydrotalcite préparée à l'étape (2) sur deux côtés d'une membrane de base par le biais d'un revêtement au rouleau, et le séchage de la membrane de base pour obtenir une membrane enduite d'hydrotalcite semi-finie ; et en utilisant la membrane enduite d'hydrotalcite semi-finie en tant que membrane de base, l'application de la suspension de revêtement MOF obtenu à l'étape (1) sur deux côtés de la membrane par le biais d'un revêtement mixte, et le séchage de la membrane pour obtenir le séparateur enduit de composite à résistance thermale et perméabilité à l'air élevée.

2. Procédé pour la préparation du séparateur enduit d'un composite à résistance thermique et perméabilité à l'air élevée selon la revendication 1, dans lequel le rapport de masse entre le produit MOF et le PVDF dans l'étape (1) est de 1,5:1 à 3:1.

3. Procédé pour la préparation du séparateur enduit d'un composite à résistance thermique et perméabilité à l'air élevée selon la revendication 1, dans lequel la suspension de revêtement d'hydrotalcite et la suspension de revêtement MOF dans l'étape (3) sont appliquées avec une épaisseur de couche de 0,5 à 1,5 pm.
